(19) **Europäisches Patentamt**
**European Patent Office**
**Office européen des brevets**

(11) **EP 4 749 535 A1**

(12) **EUROPEAN PATENT APPLICATION**

(43) Date of publication:
**27.05.2026 Bulletin 2026/22**

(21) Application number: **24214596.9**

(22) Date of filing: **21.11.2024**

(51) International Patent Classification (IPC):
**G06N 5/01** (2023.01)      **G06N 7/01** (2023.01)
**G06N 20/20** (2019.01)

(52) Cooperative Patent Classification (CPC):
**G06N 5/01; G06N 7/01; G06N 20/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Pfrommer, Timo**
**70567 Stuttgart (DE)**
• **Steimer, Andreas**
**75328 Schoemberg (DE)**
• **Moster, Benjamin**
**75223 Niefern-Oeschelbronn (DE)**

Remarks:
Amended claims in accordance with Rule 137(2) EPC.

(54) **METHOD OF GRADIENT-BASED BAYESIAN INFORMATION CRITERION COMPRESSION OF DECISION TREES**

(57) A computer-implemented method of compressing a decision tree by pruning its structure, wherein the decision tree is configured to determine a classification of its input, the method comprising the steps of: Receiving trained decision tree comprising a plurality of nodes, wherein each inner node is associated with a branching function. Outputting a score for each class label based on the traversed paths and the outputs of the reached leaf nodes and inner leaf nodes. Determining based on the outputs and the parameters of the Decision Tree a Bayesian Information Criterion (BIC). Optimizing at least the parameter of the probabilistic branching functions and the first parameters by minimizing a loss function based on the Bayesian Information Criterion (BIC), wherein the optimization is performed using gradient descent.

Fig. 1

EP 4 749 535 A1

## Description

The invention concerns a method of compressing a decision tree by pruning its structure by optimizing a Bayesian Information Criterion via gradient decent, a computer program and a machine-readable storage medium, and a system.

Prior Art

Despite the impressive performance of Neural Networks, when it comes to performance evaluation on tabular data sets, decision trees and ensembles thereof are still considered state-of-the-art in machine learning (ML).

However, the "big 3" best performing decision tree frameworks (XGBoost, CatBoost, LightGBM) in terms of ML performance (e.g. accuracy, MSE) are all based on greedy heuristics. Therefore, there is potential space for improvement regarding ML performance parameter sparsity. In particular, the latter aspect, i.e. how many tree parameters are needed to achieve a specific ML performance level, has been largely unexplored in the tree learning .

Advantages of the invention

The present invention describes a gradient based tree learning methodology that (a) leads to better performing tree and ensembles thereof and (b) more efficient, learned tree structures. More specifically, the latter aspect means that for a given parameter budget our tree (ensembles) achieve superior ML performance when compared to the state of the art.

Moreover, the present approach allows to perform tree learning for classification and regression in the presence of precise constraints on the total number of model parameters. This is particularly useful in the domain of embedded ML which has become of considerable interest in recent years.

Disclosure of the invention

In a first aspect of the invention, a method of compressing a decision tree by pruning its structure is proposed. The method starts with a step of receiving a decision tree comprising a plurality of nodes, in particular a large decision tree. Preferably, each inner node is associated with a probabilistic or continuous branching function.

This is followed by a step of adding to each node and leaf of the decision tree an additional, first parameter, wherein the parameter is a (random) variable that is defined by a hard-concrete distribution, wherein said parameter indicates the probability of terminating the traversal at the corresponding inner leaf node. An inner leaf node of a decision tree is a node that is not a terminal node (leaf) and has child nodes, in particular it represents a decision point where the data is split based on certain criteria to further classify or predict the outcome. It is noted that other probability distributions can be used, in particular with a similar curvature shape, however said specific distribution achieved the best results.

This is followed by a step of applying the decision tree on a data set, wherein for each input sample of the data set, the tree structure is traversed according to the branching functions of the inner nodes, wherein the probability of transitioning to a child node is recursively determined by the branching function of the parent node and in particular also determined based on the first parameter.

This is followed by a step of determining based on the outputs and the parameters of the Decision Tree a Bayesian Information Criterion (BIC) and optimizing at least the parameter of the probabilistic branching functions and the first parameters by minimizing a loss function based on the Bayesian Information Criterion (BIC), wherein the optimization is performed using gradient descent.

The advantage of the method is that due to the first parameter in combination with the BIC loss function, the method converges to a smaller decision tree, in other words the method lends itself to hardware-size constrained boosted tree. Thus the optimized tree after the method is more hardware-efficient since its structure is smaller.

It is proposed that the first parameter characterizing the hard-concrete distributions is parameterized by a scoring parameter and a temperature parameter, wherein the scoring parameter is optimized by gradient decent and the temperature parameter is set by a scheduler. Preferably, the temperature parameter is annealed during the training process. Preferably, the loss function is further based on a negative log-likelihood of the training data. Preferably, the gradient descent optimization utilizes the well-known reparameterization trick for handling the hard-concrete distributions.

Furthermore, it is proposed that the tree structure is pruned after the optimization step by deleting the nodes with a first parameter having a probability of terminating the traversal higher than a predefined threshold.

Furthermore, it is proposed that the input data of the decision tree are time series or tabular data recorded by a sensor, wherein the decision tree outputs a classification of its input by predicting a categorical label of a given input.

In a second aspect of the invention, the method of the first aspect is applied to an ensemble of decision trees comprising repeating the method the first aspect of the invention for multiple trees, wherein each subsequent tree is trained to correct the errors of the previous trees.

In further aspects of the invention, it is envisioned to use said compressed classifier compressed with one of the above methods by a method comprising the steps of:

- receiving a sensor signal comprising data from the sensor,
- determining an input signal which depends on said sensor signal, and
- feeding said input signal into said classifier to obtain an output signal that characterizes a classification of said input signal.

Said classifier may be endowed with such structure that it is trainable to identify and distinguish e.g. pedestrians and/or vehicles and/or road signs and/or traffic lights and/or road surfaces and/or human faces and/or medical anomalies in imaging sensor images. Alternatively, said classifier, e.g. a neural network, may be endowed with such structure that is trainable to identify spoken commands in audio sensor signals.

Such classifiers may then be used for providing an actuator control signal for controlling an actuator, comprising all the steps of the above method and further comprising the step of:

- determining said actuator control signal depending on said output signal Preferably said actuator controls an at least partially autonomous robot and/or a manufacturing machine and/or an access control system.

Embodiments of the invention will be discussed with reference to the following figures in more detail. The figures show:

Figure 1    a schematic flow diagram of an embodiment of the invention;

Figure 2    a control system controlling an at least partially autonomous robot;

Figure 3    a control system controlling a manufacturing machine;

Figure 4    a control system controlling an access control system;

Figure 5    a control system controlling a surveillance system;

Figure 6    a control system controlling an automated personal assistant;

Figure 7    a control system controlling an imaging system;

Figure 8    a training system for controlling the classifier.

The present approach builds on the soft tree methodology of e.g. Nicholas Frosst and Geoffrey Hinton: Distilling a neural network into a soft decision tree, i.e. we use soft binary decision trees trained with a mini-batch gradient descent-like procedure, where the left child of (binary) node i is probabilistically selected by a logistic-type decision function $p_i(x|\theta_i)$, with $\theta_i$ denoting the parameters for $i$'s decision function. Trees are made up of 3 types of nodes: inner, inner leaf and leaf nodes.

Inner nodes act like a switch by employing a (probabilistic) decision function selecting which of its children is to be considered next in a path from the root to one of the leaf nodes. Those leaf nodes (also referred to as "bigots") consist of trainable scoring functions that provide a score value to each of the class labels.

Inner leaf nodes are each associated 1:1 to an inner node and -as scorers- are functionally equivalent to the bigots of leaf nodes except that they act as "dump states". That is, any path towards a leaf node can be stopped prematurely by ending at an inner leaf nodes bigot. Whether or not path traversal is stopped prematurely is decided upon the state of a (relaxed) binary variable $z_i$ associated with each inner node $i$, s.t. $z_i = 0$ encodes for the dump state being reached at $i$. Predictions are made by forming the expected score across all possible paths including those ending at dump states.

Distribution of the $z_i$ is modeled by a hard-concrete distribution $z_i \sim \mathcal{HC}(\alpha_i, \lambda)$, where $\alpha_i$ is a scoring and $\lambda$ a (annealed) temperature parameter, which can be adjusted. Due to the relaxing properties of the hard-concrete combined with an annealing procedure we thus obtain a setup that allows for hard binary selection, while still maintaining full differentiability. This then enables us to learn tree structures in a gradient based way, upon choosing an appropriate loss criterion such as BIC that punishes overly complex trees.

More specifically, the score $s$ for class $y$ based on feature input $x$ and given $z$ is computed as follows:

$$s(y|x,z) = \sum_{i \in InnerNodes} P(path_i \mid x, z, \theta) \cdot (1 - z_i) \cdot B_i(y)$$
$$+ \sum_{i \in LeafNodes} P(path_i \mid x, z, \theta) \cdot B_i(y)$$

where

$$P(path_i|x,z,\theta) := \prod_{j \in Anchestors(i)} z_j \cdot p_j(x|\theta_j)^{\beta_{ij}} \cdot \left(1 - p_j(x|\theta_j)\right)^{1-\beta_{ij}}$$

is the probability of reaching node *i* on the *path$_i$* starting from the root node and $\beta_{ij} \in \{0,1\}$ indicates whether the left(1) or right(0) branch has to be taken at *j* for reaching *i* via *path$_i$*, and *z* denotes the vector (*z$_i$*| $\in$ *InnerNodes*) and *B$_i$(y)* the score for class y provided by the bigot associated with either inner node or leaf *i*.

In $p_j(x|\theta_j)$ variable selection is performed for *x,* such that at the end of the training procedure a single feature is active only at each node. Such selection is realized by an optional annealed multivariate concrete variable $z_i^* \sim \mathcal{MC}(\beta_i, \lambda)$ , where *beta$_i$* is a vector of trainable parameters. $p_j(x|\theta_j)$ is then given as follows

$$p_i(x|\theta_i) = I(z_i^* \circ w \cdot x + b)$$

where $\circ$ is the Hadamard product, $I(\cdot)$ an activation function, *w* a weight vector, *b* a bias parameter and $\theta_i = (z_i^*, w, b)$ .

Taken all together probabilistic predictions are then formed by softmaxing the expected value of *s(y|x,z)*, i.e.

$$P(y|x) = softmax(E_z\, s(y|x,z))$$

In order to incorporate the a self-pruning during optimization of the tree, it is proposed to utilize the BIC score as a loss term. Preferably the negative BIC is used, i.e.:

$$nBIC = 2 \cdot nll + \log(N) \cdot k$$

$$nll = -\sum_{n=1}^{N} \log P(y_n|x_n)$$

with *k = k$_{InnerNodes}$ + k$_{InnerLeafNodes}$ + k$_{LeafNodes}$* the total number of parameters of all components of the tree model and *nll* the negative log-likelihood of the data {(*x_n, y_n*)|*n* = 1, ..., *N*}. *nll* can be minimized w.r.t. *z* using the reparameterization trick on *s(y|x, z)* -which is the usual way of dealing with hard-concrete variables (see e.g. Chris J. Maddison, Andriy Mnih, and Yee Whye Teh. The concrete distribution: A continuous relaxation of discrete random variables, 2017.). Alternatively, more efficiently, by exploiting linearity of *s(y|x, z)* on the *z$_i$*, which allows to approximate the direct evaluation of *E_z s* , assuming that the *z$_i$* to be independent *P(z) = $\Pi_i$ P(z$_i$)*}.

By having $\delta$-peaks at 0 and 1 respectively the noncontinuous hard-concrete distribution at low temperatures becomes similar to the Bernoulli-Distribution and we may thus approximate :

$$E_{z_i}[z_i] \approx P(z_i > 0) = sigmoid(\log \alpha_i - \lambda \log \frac{-\gamma}{\zeta}) =: \tilde{z}_i(\alpha_i)$$

with $\gamma$, $\zeta$ being fixed parameters of the hard-concrete distribution- which we can use to replace the *z$_i$* in the first equation above and second equation above. This way we can obtain a differentiable expression for computing the gradient of *nll.*

Likewise, for inner nodes *k$_{InnerNodes}$* can be approximated by (assuming all branching gates to operate on single feature variables only, which is guaranteed by the feature selection mechanism described in the main text, leading to one surviving weight and the bias parameters):

$$k_{InnerNodes} \approx 2 \cdot \sum_{i \in kInnerNodes} \tilde{z}_i(\alpha_i)$$

which once again yields a differentiable expression w.r.t $\alpha_j$.

However, for a tree structured model, disabling an inner node $j \in$ *Anchestors*($i$) by setting $z_j = 0$ disables descendant node $i$ as well, since a dump state is reached *for* $j$ which renders $P(path_j|x, z, \theta) = 0$. Consequently, the gradient of *nll* w.r.t. $\alpha_i$ becomes zero as well, further reducing the effective number of parameters. Therefore, instead of letting the model reduce such superfluous parameters through gradient descent of $k_{InnerNodes}$ we can significantly boost training efficiency of the model by replacing $\tilde{z}_j(\alpha_i)$ in previous equation in the following way:

$$k\_\{InnerNodes\} \approx \sum\_\{i \in k\_\{InnerNodes\}\} \tilde{z}\_\{i\}(\alpha\_i) \cdot \prod\_\{j \in Anchestors(i)\}\} \tilde{z}\_\{j\}(\alpha\_j)$$

In other words, z's belonging to descendant nodes $i$ of a node $j$ with $z_j = 0$ will automatically become zero as well, which is exactly the desired training behavior of a tree structured model.

For (inner) leaf nodes the effective number of parameters can be computed in a similar way:

$$k_{InnerLeafNodes} \approx \sum_{i \in kInnerNodes} |C| \left(1 - \tilde{z}_i(\alpha_i)\right) \cdot \prod_{j \in Anchestors(i)} \tilde{z}_i(\alpha_i)$$

$$k_{LeafNodes} \approx \sum_{i \in kLeafNodes} |C| \prod_{j \in Anchestors(i)} \tilde{z}_i(\alpha_i)$$

where |C| denotes the number of classes.

In a preferred further embodiment of the invention, the Bonsai Method endowed with Hard Concrete Pruning is proposed. The Bonsai Method as such is known from the publication of Ashish Kumar, Saurabh Goyal, and Manik Varma. Resource-efficient machine learning in 2 kb ram for the internet of things. In International conference on machine learning, pages 1935-1944. PMLR, 2017.

The type of trees considered by the Bonsai method differ from those utilized by the approach above. Most notably, Bonsai only considers single trees, such that each node contributes to the final prediction $y$ leading to the following formula:

$$y(x) = \sum_i \overline{z}_i(\alpha_i) I_i(x|\theta) W_i^T Sx \circ \tanh(\sigma V_i^T Sx)$$

where $\overline{z}_i(\alpha_i) := \tilde{z}_i(ai) \prod_{j \in Anchestors(i)} \tilde{z}_j(\alpha_j)$, $\sigma$ an inverse-temperature like hyperparameter, $S$ denotes a sparse matrix for projecting feature vector $x$ to a lower dimensional representation, $\theta_i$, $W_i$, $V_i$ different vectors of the trees trainable parameterization. $I_i(x|\theta)$ is a trainable indicator function taking the value 1 if node $k$ lies along the path traversed by x and 0 otherwise, while $W_i$, $V_i$ are sparse predictors learnt at node $i$.

Moreover, Bonsai is based on the following training objective:

$$\min_{S,\Theta,\alpha} \mathcal{J}(S, \Theta) = \frac{\lambda_\theta}{2} Tr\left(\theta^T Z_\theta^T Z_\theta \theta\right) +$$
$$\frac{\lambda_W}{2} Tr\left(W^T \overline{Z^T} \overline{Z} W\right) +$$
$$\frac{\lambda_V}{2} Tr\left(V^T \overline{Z^T} \overline{Z} V\right) + \frac{\lambda_S}{2} Tr(SS^T) + \lambda_z \|\overline{z}_0\| +$$
$$\frac{1}{N} \sum_{n=1}^{N} \mathcal{L}(x_n, y_n, y(x_n); S, \Theta)$$

s. t. $\|S\|_0 \le B_s$, $\|\Theta\| \le B_\theta$

where $(x_n, y_n)_{n=1}^N$ is a training set of features $x_n$ and targets $y_n$. $\Theta := [\theta, W, V]$ denotes the tuple of indicated parameters assembled into matrices and $\mathcal{L}$ () is a loss function and $\lambda_\theta$, $k_W$, $k_V$, $\lambda_{\bar{z}}$ are penalty hyperparameters controlling the relative strength of their respective regularizers. $\overline{Z}_\theta, \overline{Z}$ are diagonal matrices containing the $\overline{z}_i$ of the internal and total nodes on their main diagonal respectively (we have suppressed dependencies on $\alpha := (\alpha_i)_i$ here for brevity). Finally, $B_S$ and $B$ are budget constraints on the projection matrix and indicator parameters respectively.

In Bonsai the constrained objective is minimized using projected gradient descent (PGD). This is clearly a suboptimal procedure, as the constraint is satisfied by cutting off the smallest parameter vector components after each gradient update, rather than the latter being adapted gradient-wise. Furthermore, trace priors are needed for the respective parameter matrices, in order to incentivize small entries that can be safely cut off. Thus, this strategy not only increases the number of hyperparameters, but it also prevents utilization of the BIC, which is formulated based on flat priors.

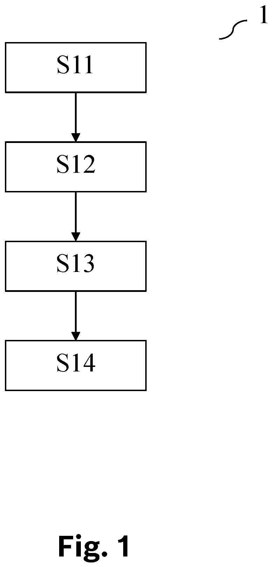

Figure 1 shows an embodiment of a flow chart 1 of a method for compressing a decision tree by pruning its structure while preserving classification accuracy according to the mathematical explanation above. This is achieved through a novel approach that combines probabilistic path traversal, dynamic pruning controlled by hard-concrete distributions, and gradient-based optimization of the Bayesian Information Criterion (BIC).

The method begins by receiving (S11) a trained decision tree, which serves as the starting point for the compression process. In another embodiment of Step S11, the decision tree has not been trained. This initial tree comprises a plurality of nodes, each associated with a branching function that determines how input samples traverse the tree during classification. Unlike traditional hard decision trees where branching decisions are deterministic, this method introduces preferably probabilistic branching.

An important concept is the introduction (S12) of a first parameter, denoted as 'z', for each inner node in the decision tree, wherein the first parameter z also can be referred to as a random variable. This parameter is drawn from a hard-concrete distribution and plays a crucial role in dynamically pruning the tree structure. The hard-concrete distribution allows for learning discrete pruning decisions (on/off) while maintaining differentiability, which is essential for gradient-based optimization. The value of 'z' at each node represents the probability of terminating the traversal at that node, effectively acting as a switch for subtree activation. With these parameters in place, the method proceeds to apply the decision tree to a dataset. For each input sample, the tree is traversed according to the probabilistic branching functions of the inner nodes. Crucially, the probability of transitioning to a child node is not solely determined by the parent node's branching function but is also influenced by the 'z' parameter of that node.

This introduces a probabilistic element into the traversal process, where paths can terminate prematurely at any node with a certain probability defined by its 'z' parameter. This probabilistic traversal allows the method to explore different pruned versions of the tree implicitly during training. The traversal concludes when a leaf node or an inner node with a 'z' value close to 1 is reached. Upon reaching a terminal node (either a leaf node or a pruned inner node), a score for each class label is computed based on the traversed path and the learned output parameters of the reached node. These scores are then aggregated to form a prediction for the input sample.

In the next step (S13), a data set is proceeded by the decision tree.

After processing the dataset, the method (S14) calculates the Bayesian Information Criterion (BIC) based on the obtained outputs and the parameters of the decision tree. BIC serves as a crucial metric for evaluating the trade-off between model fit and complexity, penalizing overly complex trees. The core of the optimization process involves minimizing a loss function based on the BIC using gradient descent. This optimization targets both the parameters of the probabilistic branching functions at each node and the 'z' parameters controlling the pruning. By adjusting these parameters, the method simultaneously refines the branching decisions and the tree structure.

As training progresses, preferably the annealing of the temperature parameter in the hard-concrete distribution pushes the 'z' values towards either 0 or 1, effectively solidifying the pruning decisions. Nodes with 'z' values close to 0 are effectively removed, resulting in a compressed tree structure. The iterative application of gradient descent leads to a final, pruned tree that balances classification accuracy with reduced complexity. The resulting compressed tree is more efficient in terms of memory and computational resources during inference while maintaining comparable predictive performance.

This method distinguishes itself from existing pruning techniques by integrating the pruning process directly into the training procedure, rather than performing it as a separate post-processing step. This leads to more globally optimized solutions and avoids the limitations of heuristic-based pruning methods. Moreover, the use of hard-concrete distributions allows for differentiable pruning, enabling efficient optimization with gradient-based methods.

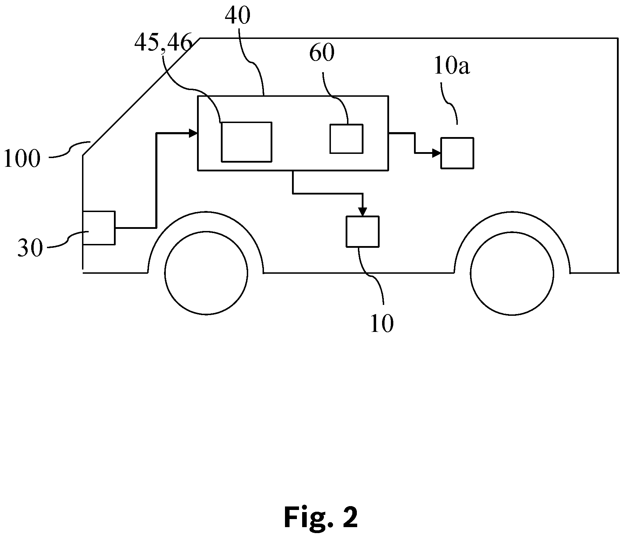

Shown in figure 2 is one embodiment of an actuator with a control system 40. Actuator and its environment will be jointly called actuator system. At preferably evenly spaced distances, a sensor 30 senses a condition of the actuator system.

The sensor 30 may comprise several sensors. Preferably, sensor 30 is an optical sensor that takes images of the environment. An output signal S of sensor 30 (or, in case the sensor 30 comprises a plurality of sensors, an output signal S for each of the sensors) which encodes the sensed condition is transmitted to the control system 40.

Thereby, control system 40 receives a stream of sensor signals. It then computes a series of actuator control commands depending on the stream of sensor signals, which are then transmitted to actuator unit 10 that converts the control commands into mechanical movements or changes in physical quantities. For example, the actuator unit 10 may convert the control command into an electric, hydraulic, pneumatic, thermal, magnetic and/or mechanical movement or change. Specific yet non-limiting examples include electrical motors, electroactive polymers, hydraulic cylinders, piezoelectric actuators, pneumatic actuators, servomechanisms, solenoids, stepper motors, etc.

Control system 40 receives the stream of sensor signals of sensor 30 in an optional receiving unit 50. Receiving unit 50 transforms the sensor signals S into input signals x. Alternatively, in case of no receiving unit 50, each sensor signal S may directly be taken as an input signal x. Input signal x may, for example, be given as an excerpt from sensor signal S. Alternatively, sensor signal S may be processed to yield input signal x. Input signal x comprises image data corresponding to an image recorded by sensor 30. In other words, input signal x is provided in accordance with sensor signal S.

Classifier 60 compressed according to the method of Fig. 1 is parametrized by parameters $\phi$, which are stored in and provided by parameter storage $St_1$.

Classifier 60 determines output signals y from input signals x. The output signal y comprises information that assigns one or more labels to the input signal x. Output signals y are transmitted to an optional conversion unit 80, which converts the output signals y into the control commands A. Actuator control commands A are then transmitted to actuator unit 10 for controlling actuator unit 10 accordingly. Alternatively, output signals y may directly be taken as control commands A.

Actuator unit 10 receives actuator control commands A, is controlled accordingly and carries out an action corresponding to actuator control commands A. Actuator unit 10 may comprise a control logic which transforms actuator control command A into a further control command, which is then used to control actuator 10.

In further embodiments, control system 40 may comprise sensor 30. In even further embodiments, control system 40 alternatively or additionally may comprise actuator 10.

Furthermore, control system 40 may comprise a processor 45 (or a plurality of processors) and at least one machine-readable storage medium 46 on which instructions are stored which, if carried out, cause control system 40 to carry out a method according to one aspect of the invention.

In a preferred embodiment of Figure 2, the control system 40 is used to control the actuator, which is an at least partially autonomous robot, e.g. an at least partially autonomous vehicle 100.

Sensor 30 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 100. Alternatively or additionally sensor 30 may comprise an information system for determining a state of the actuator system. One example for such an information system is a weather information system which determines a present or future state of the weather in environment 20.

Actuator unit 10, which is preferably integrated in vehicle 100, may be given by a brake, a propulsion system, an engine, a drivetrain, or a steering of vehicle 100. Actuator control commands A may be determined such that actuator (or actuators) unit 10 is/are controlled such that vehicle 100 avoids collisions with said detected objects. Detected objects may also be classified according to what the classifier 60 deems them most likely to be, e.g. pedestrians or trees, and actuator control commands A may be determined depending on the classification.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor 30, preferably an optical sensor, to determine a state of plants in the environment 20. Actuator unit 10 may be a nozzle for spraying chemicals. Depending on an identified species and/or an identified state of the plants, an actuator control command A may be determined to cause actuator unit 10 to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor 30, e.g. an optical sensor, may detect a state of an object which is to undergo processing by the household appliance. For example, in the case of the domestic appliance being a washing machine, sensor 30 may detect a state of the laundry inside the washing machine. Actuator control signal A may then be determined depending on a detected material of the laundry.

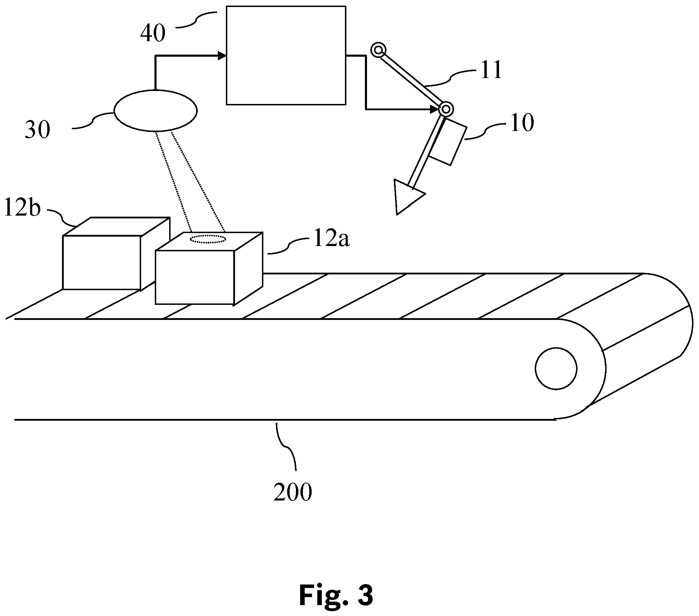

Shown in figure 3 is an embodiment in which control system 40 is used to control a manufacturing machine 11, e.g. a solder mounter, punch cutter, a cutter or a gun drill) of a manufacturing system 200, e.g. as part of a production line.

Sensor 30 may be given by an optical sensor which captures properties of e.g. a manufactured product 12. Classifier 60 may determine a state of the manufactured product 12 from these captured properties. Actuator unit 10 which controls manufacturing machine 11 may then be controlled depending on the determined state of the manufactured product 12 for a subsequent manufacturing step of manufactured product 12. Or, it may be envisioned that actuator unit 10 is controlled during manufacturing of a subsequent manufactured product 12 depending on the determined state of the manufactured product 12.

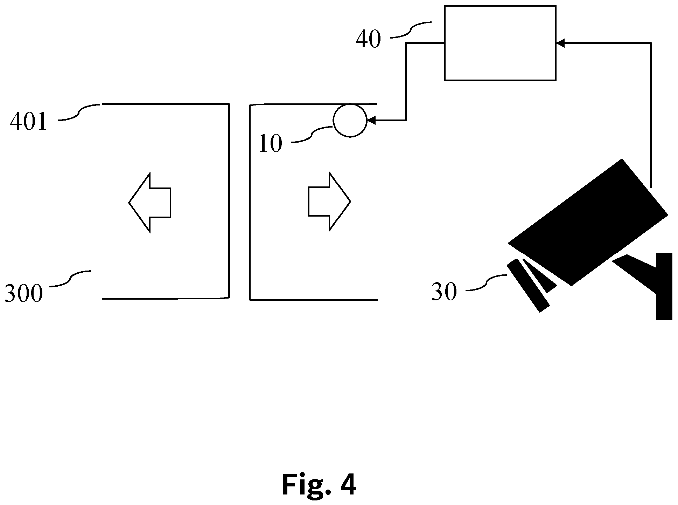

Shown in figure 4 is an embodiment in which control system controls an access control system 300. Access control system may be designed to physically control access. It may, for example, comprise a door 401. Sensor 30 is configured to detect a scene that is relevant for deciding whether access is to be granted or not. It may for example be an optical sensor for providing image or video data, for detecting a person's face. Classifier 60 may be configured to interpret this image or video data e.g. by matching identities with known people stored in a database, thereby determining an identity of the person. Actuator control signal A may then be determined depending on the interpretation of classifier 60, e.g. in accordance with the determined identity. Actuator unit 10 may be a lock which grants access or not depending on actuator control signal A. A non-physical, logical access control is also possible.

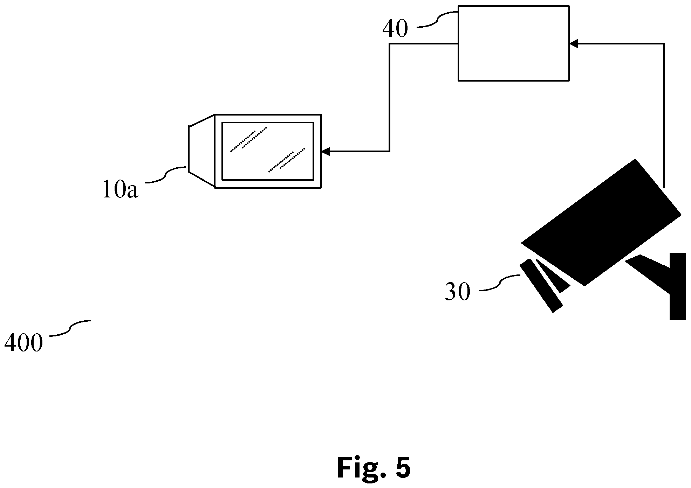

Shown in figure 5 is an embodiment in which control system 40 controls a surveillance system 400. This embodiment is largely identical to the embodiment shown in figure 5. Therefore, only the differing aspects will be described in detail. Sensor 30 is configured to detect a scene that is under surveillance. Control system does not necessarily control an actuator 10, but a display 10a. For example, the machine learning system 60 may determine a classification of a scene, e.g. whether the scene detected by optical sensor 30 is suspicious. Actuator control signal A which is transmitted to display 10a may then e.g. be configured to cause display 10a to adjust the displayed content dependent on the determined classification, e.g. to highlight an object that is deemed suspicious by machine learning system 60.

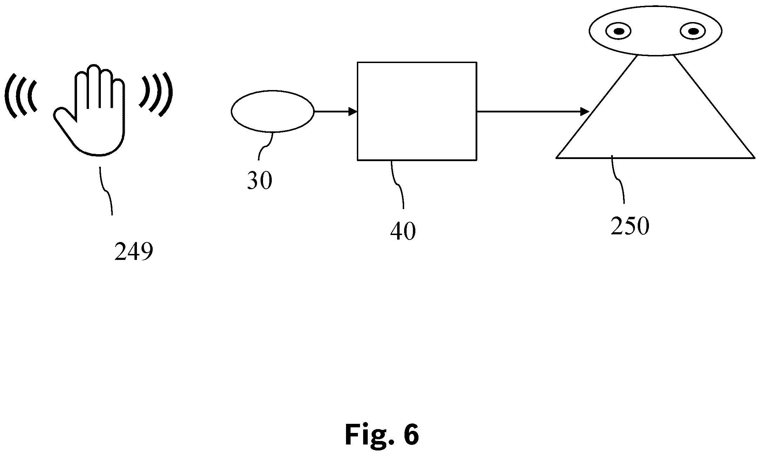

Shown in figure 6 is an embodiment in which control system 40 is used for controlling an automated personal assistant 250. Sensor 30 may be an optic sensor, e.g. for receiving video images of a gestures of user 249. Alternatively, sensor 30 may also be an audio sensor e.g. for receiving a voice command of user 249.

Control system 40 then determines actuator control commands A for controlling the automated personal assistant 250. The actuator control commands A are determined in accordance with sensor signal S of sensor 30. Sensor signal S is transmitted to the control system 40. For example, classifier 60 may be configured to e.g. carry out a gesture recognition algorithm to identify a gesture made by user 249. Control system 40 may then determine an actuator control command A for transmission to the automated personal assistant 250. It then transmits said actuator control command A to the automated personal assistant 250.

For example, actuator control command A may be determined in accordance with the identified user gesture recognized by classifier 60. It may then comprise information that causes the automated personal assistant 250 to retrieve information from a database and output this retrieved information in a form suitable for reception by user 249.

In further embodiments, it may be envisioned that instead of the automated personal assistant 250, control system 40 controls a domestic appliance (not shown) controlled in accordance with the identified user gesture. The domestic appliance may be a washing machine, a stove, an oven, a microwave or a dishwasher.

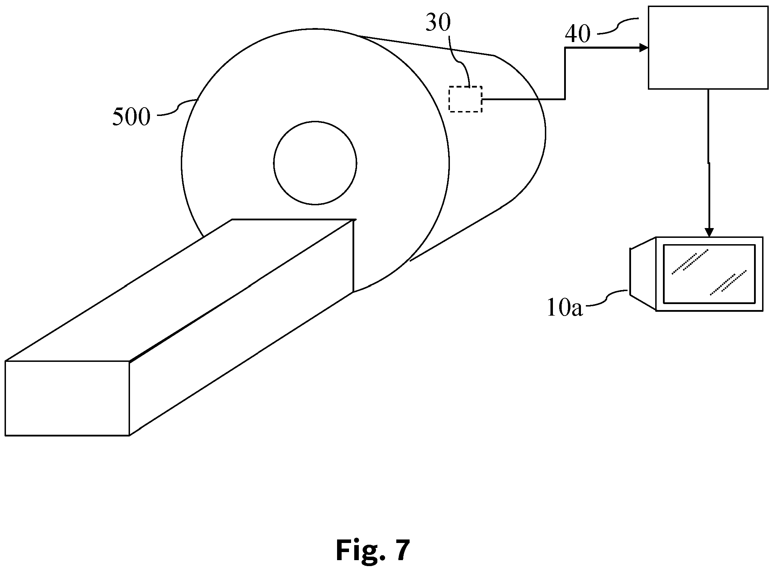

Shown in figure 7 is an embodiment of a control system 40 for controlling an imaging system 500, for example an MRI apparatus, x-ray imaging apparatus or ultrasonic imaging apparatus. Sensor 30 may, for example, be an imaging sensor. Machine learning system 60 may then determine a classification of all or part of the sensed image. Actuator control signal A may then be chosen in accordance with this classification, thereby controlling display 10a. For example, machine learning system 60 may interpret a region of the sensed image to be potentially anomalous. In this case, actuator control signal A may be determined to cause display 10a to display the imaging and highlighting the potentially anomalous region.

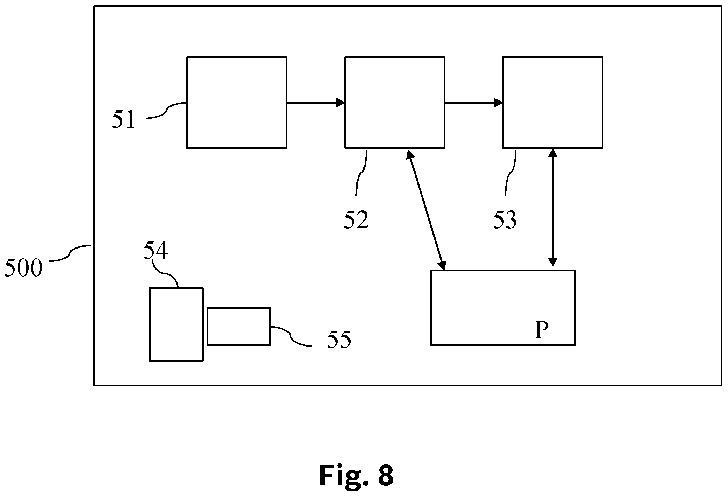

Shown in figure 8 is an embodiment of a training system 500. The training device 500 comprises a provider system 51, which provides input images from a training data set. Input images are fed to the neural network 52 to be trained, which determines output variables from them. Output variables and input images are supplied to an assessor 53, which determines acute hyper/parameters therefrom, which are transmitted to the parameter memory P, where they replace the current parameters. The assessor 53 is arranged to execute steps XX of the method according to Fig1.

The procedures executed by the training device 500 may be implemented as a computer program stored on a machine-readable storage medium 54 and executed by a processor 55.

The term "computer" covers any device for the processing of pre-defined calculation instructions. These calculation instructions can be in the form of software, or in the form of hardware, or also in a mixed form of software and hardware.

It is further understood that the procedures cannot only be completely implemented in software as described. They can also be implemented in hardware, or in a mixed form of software and hardware.

**Claims**

**1.** A computer-implemented method (1) of compressing a decision tree by pruning its structure, wherein the decision tree is configured to determine a classification of its input, the method comprising the steps of:

Receiving (S11) a decision tree comprising a plurality of nodes, wherein each inner node is associated with a branching function;

Adding (S12) to each node and leaf of the decision tree a first parameter (z), wherein the parameter is defined by a hard-concrete distribution, wherein the parameter indicates the probability of terminating the traversal at the corresponding inner leaf node;

Applying the decision tree on a data set, wherein for each input sample of the data set, the tree structure is traversed according to the probabilistic branching functions of the inner nodes, wherein the probability of transitioning to a child node is recursively determined by the branching function of the parent node;

Outputting (S13) a score for each class label based on the traversed paths and the outputs of the reached leaf nodes and inner leaf nodes;

Determining based on the outputs and the parameters of the Decision Tree a Bayesian Information Criterion (BIC); and

Optimizing (S14) at least the parameter of the probabilistic branching functions and the first parameters by minimizing a loss function based on the Bayesian Information Criterion (BIC), wherein the optimization is performed using gradient descent.

2. The method of claim 1, wherein the first parameter characterizing the hard-concrete distributions is parameterized by a scoring parameter and a temperature parameter.

3. The method of any of the preceding claims, wherein the tree structure is pruned after the optimization step by deleting the nodes with a first parameter having a probability of terminating the traversal higher than a predefined threshold.

4. The method according to any the preceding claims, wherein a constraint of the decision tree is defined, in particular a maximal number of nodes and/or parameters of the decision tree, wherein the constrained is incorporated into the BIC loss term of the loss function by a Lagrangian Multiplier, in particular a L0-term in BIC is kept, while a fixed pre-factor is replaced by a Lagrange multiplier that is itself adapted.

5. The method according to any the preceding claims, wherein the input data of the decision tree are time series or tabular data recorded by a sensor, wherein the decision tree outputs a classification of its input by predicting a categorical label of a given input.

6. A computer-implemented method for using the decision tree according to any of the preceding claims for classifying sensor signals, comprising the steps of:

   - receiving a sensor signal (S) comprising data from a sensor (30),
   - determining an input signal (x) which depends on said sensor signal (S), and
   - feeding said input signal (x) into said classifier (60) to obtain an output signal (y) that characterizes a classification of said input signal (x).

7. A computer-implemented method for using a classifier (60) trained with the method according to any one of claims 1 to 5 for providing an actuator control signal (A) for controlling an actuator (10), comprising all the steps of the method according to claim 8 and further comprising the step of:

   - determining said actuator control signal (A) depending on said output signal (y).

8. The method according to claims 7, in which said actuator (10) controls an at least partially autonomous robot (100) and/or a manufacturing machine (200)) and/or an access control system (300).

9. Computer program that is configured to cause a computer to carry out the method according to any one of claims 1 to 8 with all of its steps if the computer program is carried out by a processor (45, 145).

10. Machine-readable storage medium (46, 146) on which the computer program according to claim 9 is stored.

11. System that is configured to carry out the method according to any one of claims 1 to 10.

**Amended claims in accordance with Rule 137(2) EPC.**

1. A computer-implemented method (1) of compressing a decision tree by pruning its structure, wherein the decision tree is configured to determine a classification of its input, wherein the input data of the decision tree are time series or tabular data recorded by a sensor, wherein the decision tree outputs a classification of its input by predicting a categorical label of a given input, the method comprising the steps of:

Receiving (S11) a decision tree comprising a plurality of nodes, wherein each inner node is associated with a branching function;

Adding (S12) to each node and leaf of the decision tree a first parameter (z), wherein the parameter is defined by a hard-concrete distribution, wherein the parameter indicates the probability of terminating the traversal at the corresponding inner leaf node;

Applying the decision tree on a data set, wherein for each input sample of the data set, the tree structure is traversed according to the probabilistic branching functions of the inner nodes, wherein the probability of transitioning to a child node is recursively determined by the branching function of the parent node;

Outputting (S13) a score for each class label based on the traversed paths and the outputs of the reached leaf nodes and inner leaf nodes, wherein the score s for class y based on feature input x and given z is computed as follows:

$$s(y|x,z) = \sum_{i \in InnerNodes} P(path_i \mid x, z, \theta) \cdot (1 - z_i) \cdot B_i(y)$$
$$+ \sum_{i \in LeafNodes} P(path_i \mid x, z, \theta) \cdot B_i(y)$$

where $P(path_i|x,z,\theta) := \Pi_{j \in Anchestors(i)} z_j \cdot p_j(x|\theta_j)^{\beta_{ij}} \cdot (1 - p_j(x|\theta_j))^{1-\beta_{ij}}$ is the probability of reaching node *i* on the *path_i* starting from the root node and $\beta_{ij} \in \{0,1\}$ indicates whether the left(1) or right(0) branch has to be taken at *j* for reaching *i* via *path_i*, and z denotes the vector $(z_i|i \in InnerNodes)$ and $B_i(y)$ the score for class y provided by the bigot associated with either inner node or leaf *i*, wherein in $p_j(x|\theta_j)$ variable selection is performed for x by an optional annealed multivariate concrete variable

$$z_i^* \sim \mathcal{MC}(\beta_i, \lambda),$$

where *beta_i* is a vector of trainable parameters.

$p_i(x|\theta_i)$ is then given as follows $p_i(x|\theta_i) = I(z_i^* \circ w \cdot x + b)$;

Determining based on the outputs and the parameters of the Decision Tree a Bayesian Information Criterion (BIC),

wherein the Bayesian Information Criterion (BIC) is computed as follows:

$$nBIC = 2 \cdot \underset{N}{nll} + \log(N) \cdot k$$

$$nll = -\sum_{n=1} \log P(y_n|x_n)$$

with $k = k_{InnerNodes} + k_{InnerLeafNodes} + k_{LeafNodes}$ the total number of parameters of all components of the tree model and *nll* the negative log-likelihood of the data $\{(x\_n,y\_n)|n = 1, ..., N\}$. *nll* can be minimized w.r.t. z by using the reparameterization trick on $s(y|x,z)$ or by exploiting linearity of $s(y|x, z)$ on the $z_i$, which allows to approximate the direct evaluation of $E\_z s$, assuming that the $z_i$ to be independent $P(z) = \Pi_i P(z_i)\}$; and

Optimizing (S14) at least the parameter of the probabilistic branching functions and the first parameters by minimizing a loss function based on the Bayesian Information Criterion (BIC), wherein the optimization is performed using gradient descent, wherein the tree structure is pruned after the optimization step (S14) by deleting the nodes with a first parameter having a probability of terminating the traversal higher than a predefined threshold.

2. The method of claim 1, wherein the first parameter characterizing the hard-concrete distributions is parameterized by a scoring parameter and a temperature parameter.

3. The method according to any the preceding claims, wherein a constraint of the decision tree is defined, in particular a maximal number of nodes and/or parameters of the decision tree, wherein the constrained is incorporated into the BIC loss term of the loss function by a Lagrangian Multiplier, in particular a L0-term in BIC is kept, while a fixed pre-factor is replaced by a Lagrange multiplier that is itself adapted.

4. A computer-implemented method for using the decision tree according to any of the preceding claims for classifying sensor signals, comprising the steps of:

   - receiving a sensor signal (S) comprising data from a sensor (30),
   - determining an input signal (x) which depends on said sensor signal (S), and
   - feeding said input signal (x) into said classifier (60) to obtain an output signal (y) that characterizes a classification of said input signal (x).

5. A computer-implemented method for using a classifier (60) trained with the method according to any one of claims 1 to 3 for providing an actuator control signal (A) for controlling an actuator (10), comprising all the steps of the method according to claim 4 and further comprising the step of:

   - determining said actuator control signal (A) depending on said output signal (y).

6. The method according to claims 5, in which said actuator (10) controls an at least partially autonomous robot (100) and/or a manufacturing machine (200)) and/or an access control system (300).

7. Computer program that is configured to cause a computer to carry out the method according to any one of claims 1 to 6 with all of its steps if the computer program is carried out by a processor (45, 145).

8. Machine-readable storage medium (46, 146) on which the computer program according to claim 7 is stored.

9. System that is configured to carry out the method according to any one of claims 1 to 8.

Fig. 1

**Fig. 2**

EP 4 749 535 A1

Fig. 3

EP 4 749 535 A1

**Fig. 4**

EP 4 749 535 A1

**Fig. 5**

**Fig. 6**

**Fig. 7**

EP 4 749 535 A1

Fig. 8

Europäisches
Patentamt

European
Patent Office

Office européen
des brevets

# EUROPEAN SEARCH REPORT

**Application Number**

EP 24 21 4596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NIKOLA SURJANOVIC ET AL: "Alpha-Trimming: Locally Adaptive Tree Pruning for Random Forests", ARXIV.ORG, CORNELL UNIVERSITY LIBRARY, 201 OLIN LIBRARY CORNELL UNIVERSITY ITHACA, NY 14853, 13 August 2024 (2024-08-13), XP091851256, * abstract * * page 1, line 31 - line 35 * * page 3, line 36 - line 43 * * page 6, paragraph Algorithm 1 * * page 8, paragraph Algorithm 2 * * page 8, line 3 - page 12, line 34 * ----- | 1-5,9-11 | INV. G06N5/01 G06N7/01 G06N20/20 |
| X | CN 108 989 075 A (CHINA MOBILE GROUP GUANGDONG; CHINA MOBILE COMM CORP ET AL.) 11 December 2018 (2018-12-11) * abstract * * paragraph [0082] - paragraph [0090] * ----- | 6-11 | |
| A | HE ZIZHOU ET AL: "Fault Diagnosis of Hydraulic Pump Based on TFWERF and QPSO-XGBOOST", 2022 6TH INTERNATIONAL CONFERENCE ON AUTOMATION, CONTROL AND ROBOTS (ICACR), IEEE, 23 September 2022 (2022-09-23), pages 103-108, XP034220637, DOI: 10.1109/ICACR55854.2022.9935538 [retrieved on 2022-11-04] * abstract; figures 1-4 * * page 104, column 1, line 6 - page 106, column 2, line 6 * ----- -/-- | 1-11 | **TECHNICAL FIELDS SEARCHED (IPC)** G06N |

The present search report has been drawn up for all claims

| Place of search | Date of completion of the search | Examiner |
|---|---|---|
| The Hague | 15 April 2025 | Rousset, Antoine |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 21 4596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHOU W ET AL: "DECISION TREE STATE TUING BASED ON PENALIZED BAYESAIN INFORMATION CRITERION", 1999 IEEE INTERNATIONAL CONFERENCE ON ACOUSTICS, SPEECH, AND SIGNAL PROCESSING. PHOENIX, AZ, MARCH 15 - 19, 1999; [IEEE INTERNATIONAL CONFERENCE ON ACOUSTICS, SPEECH, AND SIGNAL PROCESSING (ICASSP)], NEW YORK, NY : IEEE, US, 15 March 1999 (1999-03-15), pages 345-348, XP000900129, ISBN: 978-0-7803-5042-7 * abstract * * page 346, column 1, line 6 - page 347, column 2, line 2 * | 1-11 | |
| A | DAAN FIERENS ET AL: "A comparison of pruning criteria for probability trees", MACHINE LEARNING, KLUWER ACADEMIC PUBLISHERS-PLENUM PUBLISHERS, NE, vol. 78, no. 1-2, 19 September 2009 (2009-09-19), pages 251-285, XP019772481, ISSN: 1573-0565 * abstract * * page 256, line 11 - page 260, line 11 * | 1-11 | TECHNICAL FIELDS SEARCHED (IPC) |

The present search report has been drawn up for all claims

| Place of search | Date of completion of the search | Examiner |
|---|---|---|
| The Hague | 15 April 2025 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 4596

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| CN 108989075 A | 11-12-2018 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHRIS J. MADDISON** ; **ANDRIY MNIH** ; **YEE WHYE TEH.** *The concrete distribution: A continuous relaxation of discrete random variables*, 2017

- **ASHISH KUMAR** ; **SAURABH GOYAL** ; **MANIK VARMA.** Resource-efficient machine learning in 2 kb ram for the internet of things. *International conference on machine learning*, 2017, 1935-1944